# FASCICULE DE BREVET EUROPEEN

(11) **EP 3 969 294 B1**
(45) Date de publication et mention de la délivrance du brevet: **05.04.2023**
(21) Numéro de dépôt: 20724170.4
(22) Date de dépôt: 13.05.2020
(51) Int. Cl.: B60C 9/20

(54) **PNEUMATIQUE POUR VEHICULE LOURD DE TYPE GENIE CIVIL DOTE D'UNE ARMATURE DE PROTECTION A TROIS COUCHES DIFFERENCIEES**
REIFEN FÜR EIN BAUSTELLENSCHWERLASTFAHRZEUG MIT EINER SCHUTZVERSTÄRKUNG MIT DREI DIFFERENZIERTEN SCHICHTEN
TYRE FOR A HEAVY-DUTY VEHICLE OF CONSTRUCTION PLANT TYPE, PROVIDED WITH A PROTECTIVE REINFORCEMENT HAVING THREE DIFFERENTIATED LAYERS

(30) Priorité: 14.05.2019 FR 1904982
(43) Date de publication de la demande: 23.03.2022
(73) Titulaire: COMPAGNIE GENERALE DES ETABLISSEMENTS MICHELIN, 63000 Clermont-Ferrand (FR)
(72) Inventeur: ESTENNE, Vincent, 63040 CLERMONT-FERRAND Cedex 9 (FR)
(74) Mandataire: Le Cam, Stéphane Georges Elie
(86) Numéro de dépôt international: PCT/EP2020/063340
(87) Numéro de publication internationale: WO 2020/229543

(56) Documents cités:
- EP-A1- 2 839 974
- WO-A1-2019/058053
- JP-A- H11 278 014
- JP-A- 2007 062 428

## Description

La présente invention a pour objet un pneumatique radial, destiné à équiper un véhicule lourd de type génie civil, et concerne plus particulièrement l'armature de sommet d'un tel pneumatique, et encore plus particulièrement son armature de protection.

Un tel pneumatique radial est connu par exemple de WO 2019/058053 A1.

Typiquement un pneumatique radial pour véhicule lourd de type génie civil, au sens de la norme de la European Tyre and Rim Technical Organisation ou ETRTO, est destiné à être monté sur une jante dont le diamètre est au moins égal à 25 pouces. Bien que non limitée à ce type d'application, l'invention est décrite pour un pneumatique radial de grande dimension, destiné à être monté sur un dumper, véhicule de transport de matériaux extraits de carrières ou de mines de surface, par l'intermédiaire d'une jante dont le diamètre est au moins égal à 49 pouces et peut atteindre 57 pouces, voire 63 pouces.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. La direction circonférentielle est tangente à la circonférence du pneumatique.

Dans ce qui suit, les expressions «radialement intérieur», respectivement «radialement extérieur» signifient «plus proche », respectivement «plus éloigné de l'axe de rotation du pneumatique». Par «axialement intérieur», respectivement «axialement extérieur», on entend «plus proche», respectivement «plus éloigné du plan équatorial du pneumatique», le plan équatorial du pneumatique étant le plan passant par le milieu de la surface de roulement et perpendiculaire à l'axe de rotation.

De façon générale un pneumatique comprend une bande de roulement, destinée à venir en contact avec un sol par l'intermédiaire d'une surface de roulement, dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend en outre une armature de renforcement, constituée d'une armature de sommet, radialement intérieure à la bande de roulement, et d'une armature de carcasse, radialement intérieure à l'armature de sommet.

L'armature de carcasse d'un pneumatique radial pour véhicule lourd de type génie civil comprend habituellement au moins une couche de carcasse comprenant des renforts généralement métalliques, enrobés par un matériau polymérique de type élastomère ou élastomérique, obtenu par mélangeage et appelé mélange d'enrobage. Une couche de carcasse comprend une partie principale, reliant les deux bourrelets entre eux et s'enroulant généralement, dans chaque bourrelet, de l'intérieur vers l'extérieur du pneumatique autour d'un élément de renforcement circonférentiel le plus souvent métallique appelé tringle, pour former un retournement. Les renforts métalliques d'une couche de carcasse sont sensiblement parallèles entre eux et forment, avec la direction circonférentielle, un angle compris entre 85° et 95°.

L'armature de sommet d'un pneumatique radial pour véhicule lourd de type génie civil comprend une superposition de couches de sommet s'étendant circonférentiellement, radialement à l'extérieur de l'armature de carcasse. Chaque couche de sommet est constituée de renforts généralement métalliques, parallèles entre eux et enrobés par un matériau polymérique de type élastomère ou mélange d'enrobage.

Parmi les couches de sommet, on distingue usuellement les couches de protection, constitutives de l'armature de protection et radialement les plus à l'extérieur, et les couches de travail, constitutives de l'armature de travail et radialement comprises entre l'armature de protection et l'armature de carcasse.

L'armature de protection, comprenant au moins une couche de protection, protège essentiellement les couches de travail des agressions mécaniques ou physico-chimiques, susceptibles de se propager à travers la bande de roulement radialement vers l'intérieur du pneumatique.

L'armature de protection comprend souvent deux couches de protection, radialement superposées, formées de renforts métalliques élastiques, parallèles entre eux dans chaque couche et croisés d'une couche à la suivante, en formant, avec la direction circonférentielle, des angles au moins égaux à 10° et au plus égaux à 35°.

L'armature de travail, comprenant au moins deux couches de travail, a pour fonction de ceinturer le pneumatique et de lui conférer de la rigidité et de la tenue de route. Elle reprend à la fois des sollicitations mécaniques de gonflage, générées par la pression de gonflage du pneumatique et transmises par l'armature de carcasse, et des sollicitations mécaniques de roulage, générées par le roulage du pneumatique sur un sol et transmises par la bande roulement. Elle doit en outre résister à l'oxydation et aux chocs et perforations, grâce à sa conception intrinsèque et à celle de l'armature de protection.

L'armature de travail comprend usuellement deux couches de travail, radialement superposées, formées de renforts métalliques non extensibles, parallèles entre eux dans chaque couche et croisés d'une couche à la suivante, en formant, avec la direction circonférentielle, des angles au plus égaux à 60°, et, de préférence, au moins égaux à 15° et au plus égaux à 45°.

Pour diminuer les sollicitations mécaniques de gonflage transmises à l'armature de travail, il est connu de disposer, radialement à l'extérieur de l'armature de carcasse, une armature de frettage. L'armature de frettage, dont la fonction est de reprendre au moins en partie les sollicitations mécaniques de gonflage, améliore l'endurance de l'armature de sommet par une rigidification de l'armature de sommet. L'armature de frettage peut être positionnée radialement à l'intérieur de l'armature de travail, entre les deux couches de travail de l'armature de travail, ou radialement à l'extérieur de l'armature de travail.

L'armature de frettage comprend usuellement deux couches de frettage, radialement superposées, formées de renforts métalliques, parallèles entre eux dans chaque couche et croisés d'une couche à la suivante, en formant, avec la direction circonférentielle, des angles au plus égaux à 10°.

En ce qui concerne les renforts métalliques, un renfort métallique est caractérisé mécaniquement par une courbe représentant la force de traction (en N), appliquée au renfort métallique, en fonction de son allongement relatif (en %), dite courbe force-allongement. De cette courbe force-allongement sont déduites des caractéristiques mécaniques en traction du renfort métallique, telles que l'allongement structural As (en %), l'allongement total à la rupture At (en %), la force à la rupture Fm (charge maximale en N) et la résistance à la rupture Rm (en MPa), ces caractéristiques étant mesurées selon la norme ISO 6892 de 1984.

L'allongement total à la rupture At du renfort métallique est, par définition, la somme de ses allongements structural, élastique et plastique (At = As + Ae + Ap). L'allongement structural As résulte du positionnement relatif des fils métalliques constitutifs du renfort métallique sous un faible effort de traction. L'allongement élastique Ae résulte de l'élasticité même du métal des fils métalliques, constituant le renfort métallique, pris individuellement, le comportement du métal suivant une loi de Hooke. L'allongement plastique Ap résulte de la plasticité, c'est-à-dire de la déformation irréversible, au-delà de la limite d'élasticité, du métal de ces fils métalliques pris individuellement. Ces différents allongements ainsi que leurs significations respectives, bien connus de l'homme du métier, sont décrits, par exemple, dans les documents US5843583, WO2005/014925 et WO2007/090603.

On définit également, en tout point de la courbe contrainte-déformation d'un renfort métallique, un module en extension, exprimé en GPa, qui représente la pente de la droite tangente à la courbe contrainte-déformation en ce point. En particulier, on appelle module élastique en extension ou module d'Young, le module en extension de la partie linéaire élastique de la courbe contrainte-déformation.

Parmi les renforts métalliques, on distingue usuellement les renforts métalliques élastiques, tels que ceux utilisés dans les couches de protection, et les renforts métalliques non extensibles ou inextensibles, tels que ceux utilisés dans les couches de travail.

Un renfort métallique élastique est caractérisé par un allongement structural As au moins égal à 1% et un allongement total à rupture At au moins égal à 4%. En outre, un renfort métallique élastique a un module élastique en extension au plus égal à 150 GPa, et compris usuellement entre 40 GPa et 150 GPa.

Un renfort métallique non extensible est caractérisé par un allongement total At, sous une force de traction égale à 10% de la force à rupture Fm, au plus égal à 0.2%. Par ailleurs, un renfort métallique non extensible a un module élastique en extension compris usuellement entre 150 GPa et 200 GPa.

La rigidité d'indentation d'un pneumatique est une grandeur physique qui traduit la résistance du sommet à la perforation lors du roulage sur un indenteur, comme un rocher par exemple, avec une taille de plusieurs dizaines de centimètres. Plus la rigidité d'indentation est faible et plus le sommet est performant pour absorber les obstacles.

Pour mesurer la rigidité d'indentation d'un pneumatique, on réalise un test de roulage sur des obstacles normalisés. Ces obstacles sont des polars à tête hémisphérique de diamètres et de hauteurs variables. Typiquement, le diamètre du polar varie de 0.5 pouces à 3 pouces, pour une hauteur comprise 25 mm à 400 mm. Le pneumatique est gonflé, monté sur la jante d'un véhicule de type Dumper. On réalise plusieurs passages successifs sur le polar en augmentant progressivement leur hauteur. Le test s'achève quand en roulant sur un polar suffisamment haut on finit par perforer le sommet du pneumatique testé. Pendant le test, un dispositif permet de mesurer les efforts maximaux générés au centre de la roue. A l'issue du test, les efforts du centre roue sont représentés en fonction de la hauteur des polars. La rigidité d'indentation correspond à la variation de l'effort vertical au centre roue par rapport à la variation de hauteur des polars.

Lors du roulage du pneumatique sur des pierres plus ou moins tranchantes présentes sur les pistes sur lesquelles circulent les dumpers, les inventeurs ont observé que la bande de roulement d'un pneumatique est fréquemment soumise à des coupures susceptibles de la traverser radialement vers l'intérieur jusqu'à l'armature de protection, qui ralentit notoirement la propagation des fissures, initiées par les coupures, jusqu'à l'armature de travail. Pour assurer cette fonction de ralentissement de la fissuration, les couches de protection sont usuellement constituées par des renforts métalliques élastiques enrobés dans un mélange élastomérique d'enrobage, qui présentent l'avantage de conférer à l'armature de protection une certaine souplesse, et donc une aptitude aux déformations lors du roulage sur des obstacles tels que des pierres, tout en garantissant une résistance à la rupture de l'armature de protection suffisante.

Il a été toutefois constaté par les inventeurs que, suite à l'apparition de coupures dans la bande de roulement, cette dernière pouvait se séparer prématurément de l'armature de protection. En d'autres termes, l'armature de protection bloque en quasi-totalité la propagation des fissures radialement vers l'intérieur de l'armature de sommet et n'autorise qu'une fissuration à l'interface de la bande de roulement et de l'armature de protection, pouvant entraîner une séparation prématurée de la bande de roulement, ou déchapage du pneumatique.

Les inventeurs se sont donnés pour objectif de diminuer le risque de déchapage d'un pneumatique radial pour véhicule lourd de type génie civil, suite à des agressions de la bande de roulement lors d'un roulage sur des pierres tranchantes, telles que des coupures, tout en garantissant une bonne résistance à la fissuration de l'armature de sommet.

Cet objectif a été atteint, selon l'invention, par un pneumatique pour véhicule lourd de type génie civil comprenant une armature de sommet, radialement intérieure à une bande de roulement et radialement extérieure à une armature de carcasse . Ladite armature de sommet comprenant, radialement de l'extérieur vers l'intérieur, une armature de protection et une armature de travail. Ladite armature de protection comprenant au moins deux couches de protection :
- une première couche de protection, de largeur axiale LP1, la plus radialement intérieure, comprenant des renforts métalliques élastiques ayant un module élastique en extension au plus égal à 150 GPa, enrobés dans un matériau élastomérique, parallèles entre eux et formant, avec une direction circonférentielle (XX') tangente à la circonférence du pneumatique, un angle Alpha1, lesdits renforts ayant un diamètre D1, répartis selon un pas axial P1 ;
- une deuxième couche de protection, de largeur axiale LP2, la plus radialement extérieure, comprenant des renforts métalliques élastiques ayant un module élastique en extension au plus égal à 150 GPa, enrobés dans un matériau élastomérique, parallèles entre eux et formant, avec une direction circonférentielle (XX') tangente à la circonférence du pneumatique, un angle Alpha2, lesdits renforts ayant un diamètre D2, répartis selon un pas axial P2;
- une armature de travail comprenant deux couches de travail comprenant respectivement des renforts métalliques enrobés dans un matériau élastomérique, parallèles entre eux, formant, avec la direction circonférentielle (XX'), un angle au moins égal à 15° et au plus égal à 45°, et croisés d'une couche de travail à la suivante ;
- une troisième couche de protection, ci-après désignée couche de protection intermédiaire, de largeur axiale LP3, est intercalée entre les couches de protection radialement la plus intérieure et radialement la plus extérieure, et est en contact avec elles, ladite couche de protection intermédiaire comprend des renforts métalliques élastiques ayant un module élastique en extension au plus égal à 150 GPa, enrobés dans un matériau élastomérique, parallèles entre eux et formant, avec une direction circonférentielle (XX') tangente à la circonférence du pneumatique, un angle Alpha3, lesdits renforts ayant un diamètre D3, répartis selon un pas axial P3 ;
- les angles Alpha1, Alpha2, Alpha3 des trois couches de protection respectivement (51), (52), (53), la plus radialement intérieure, la plus radialement extérieure, et la couche de protection intermédiaire vérifient les relations suivantes :
   -) 15° ≤ |Alpha1| ≤ 40°
   -) 15° ≤ |Alpha2| ≤ 40° Alpha1 * Alpha2 ≤ 0
   -) 35° ≤ |Alpha3| ≤ 75°;
- les écarts d'angles des renforts des couches de protection avec la direction circonférentielle (XX') en valeurs absolues vérifient les relations suivantes :
   -) |(Alpha1-Alpha3) ≥ 10°
   -) |(Alpha2-Alpha3) ≥ 10°.

Généralement, l'armature de protection des pneumatiques des véhicules du génie civil considérées ici ont deux couches de protection, mais l'invention propose d'intercaler une troisième couche de protection entre les deux couches initiales pour améliorer l'endurance de l'armature contre le déchapage. Les inventeurs ont établi les conditions mécaniques exigibles pour un fonctionnement correct de l'invention en établissant des relations entre les angles des renforts des couches de protection avec la direction circonférentielle (XX').

Selon l'invention, les angles Alphal, Alpha2, Alpha3 des trois couches de protection respectivement, la plus radialement intérieure, la plus radialement extérieure, et la couche de protection intermédiaire vérifient les relations suivantes :
-) 15° ≤ |Alpha1| ≤ 40°
-) Alpha2 * Alpha1 ≤ 0
-) 35° ≤ |Alpha3| ≤ 75°

Les deux premières relations attribuent un angle Alpha1 à la couche de protection la plus radialement intérieure, et l'angle de signe opposé Alpha2 pour la couche de protection la plus radialement extérieure. La couche de protection intermédaire radialement intercalée entre les deux couches précédentes a un angle Alpha3 plus ouvert, c'est à dire d'une valeur comprise entre 35° et 75°. Cet empilement des couches de protection vise à diminuer le risque de déchapage du pneumatique, suite à des agressions de la bande de roulement lors d'un roulage sur des pierres tranchantes, telles que des coupures tout en garantissant une bonne résistance à la fissuration de l'armature de sommet. La disposition des angles telle que décrite ci-dessus, a l'avantage de limiter les cisaillement de clivage. L'ajout de la troisième couche de protection contribue à obtenir un niveau de rigidité d'indentation qui permet une déformabilité du sommet de manière à absorber les obstacles sur les pistes.

Encore selon l'invention, les écarts des angles des renforts des couches de protection avec la direction circonférentielle XX' en valeurs absolues vérifient les relations suivantes :
-) |(Alpha1-Alpha3) ≥ 10°
-) |(Alpha2-Alpha3) ≥ 10°

Les écarts angulaires supérieurs à 10° entre la couche de protection intermédiaire et les deux autres couches de protection adjacentes visent à éloigner les renforts des couches en limitant les points de contacts d'une couche à l'autre. Cette disposition contribue à l'amélioration de la résistance du sommet contre l'oxydation. Plus précisémment si les renforts d'une couche sont affectées par une attaque d'oxydation, la limitation des points de contacts entre couches évite la propagation de l'oxydation sur les autres couches adjacentes.

Avantageusement, la tension répartie de rupture en extentions de chaque couche de protection est supérieure ou égale à 100 daN/mm.

Selon un mode de réalisation préféré des renforts métalliques élastiques, les renforts métalliques élastiques des couches de protection sont des câbles multitorons de structure 1xN comprenant une unique couche de N torons enroulés en hélice, chaque toron comprenant une couche interne de M fils internes enroulés en hélice et une couche externe de K fils externes enroulés en hélice autour de la couche interne. Ce type de structure confère au renfort un comportement élastique tel que défini précédemment.

L'assemblage du câble dépend de la position de la couche de protection dans l'empilement. Par exemple, pour la couche de protection la plus radialement extérieure, un assemblage tel que 4x(1+5)x0.26 est retenu. Ce qui signifie que le câble résulte de l'assemblage de 4 torons enroulés en hélice. Chaque toron est formé d'une couche interne de 1 fil enroulé en hélice, et d'une couche externe de 5 fils enroulés en hélice autour de la couche interne. Les fils ont un diamètre de 26 centièmes de millimètre. La force de rupture d'un tel assemblage est de l'ordre de 250 daN. On en déduit la tension de rupture de la couche de protection en fonction du pas des renforts, qui à 2,5 mm donne une tension de rupture supérieure ou égale à 100 daN/mm.

Pour les renforts métalliques élastiques de la couche de protection la plus radialement intérieure, l'assemblage retenu est 4x(4+9)x0.26. Ce câble est formé par l'enroulement en hélice de 4 torons dont chacun est constitué d'une couche interne de 4 fils enroulés en hélice, et d'une couche externe de 9 fils enroulés en hélice autour de la précédente. Les fils ont un diamètre de 26 centièmes de millimètre. Avec ce câble pour des pas de renforts de 3,7 mm, la tentions de rupture de la couche de protection est supérieure ou égale à 100daN/mm.

Encore avantageusement, les renforts de la couches de protection intercalée entre les autres couches de protection sont identiques à ceux de la couche de protection la plus radialement extérieure.

Dans un mode de réalisation simplifiée de l'invention en lien avec la standardisation de la fabrication du pneumatique qui vise à limiter le nombre de composantes pour produire le pneumatique, les renforts de la couche de protection intermédiaire sont identiques à ceux de la couche de protection la plus radialement extérieure. En réalité, seuls les angles que font les renforts avec la direction circonférentielle et les largeurs axiales diffèrent entre ces deux couches de protection.

Préférentiellement, l'angle alpha3 des renforts de la couche de protection intercalée entre la couche de protection la plus radialement intérieure, et la plus radialement extérieure, avec la direction circonférentielle est égal à -45°.

Encore préférentiellement, les angles des renforts des couches de protection respectivement la plus radialement intérieure et la plus radialement extérieure, Alpha1, et Alpha2 sont respectivement égaux à 33° et à -33°.

Généralement, l'armature de protection est formée de deux couches croisées à angles opposés de manière à constituer une grillage de protection posé radialement sur les couches de travail dans la direction extérieure. La troisième couche de protection introduite par l'invention vient s'intercaler entre les deux couches de protection croisées. La combinaison des angles Alpha3 à -45°, Alphal à 33°, et Alpha2 opposé à Alpha1 donne un fonctionnement optimal de l'invention observable sur les résultats de calculs par éléments finis pour évaluer les déformations de clivage, ainsi que sur les résultats de mesure des rigidités d'indentation.

Dans un mode de réalisation de l'invention, la largeur axiale LP3 de la couche de protection intercalée est telle que LP3 ≤ Min (LP1, LP2).

Dans cette configuration où la largeur axiale de la troisième couche de protection LP3 est plus courte que les largeurs axiales des deux couches de protection adjacentes, LP1, et LP2, l'écart de longueur, "LP2-LP3" doit être suffisant avec une valeur au moins égale à 7 mm pour éviter l'interférence de la troisième couche de protection dans le couplage des deux couches croisées. Toutefois, la largeur LP3 doit être suffisante pour recouvrir la partie centrale de la bande de roulement.

Dans un autre mode de réalisation de l'invention, les distances axiales respectives LP1, LP2, LP3 des trois couches de protection respectives vérifient la relation LP2 ≤ LP3 ≤ LP1.

Dans ce mode de réalisation de l'invention, les largeurs des couches de protection LP1, LP2 et LP3 décroissent de l'intérieur du pneumatique vers l'extérieur dans la direction radiale. Les agressions du sommet se font principalement au centre de la bande de roulement ce qui valide cette disposition des couches de protection qui garantit la protection du centre de la bande de roulement. Toutefois, les extrémités axiales des couches de protection ne doivent pas coïncider. Les inventeurs proposent un décalage d'au moins 7 mm dans la directrion axiale d'une couche de protection à l'autre à chaque extrémité axiale.

Selon un mode de réalisation préféré de l'armature de sommet, la couche de protection la plus radialement intérieure a une largeur axiale LP1 au moins égale à 1.05 fois et au plus égale à 1.25 fois la largeur axiale LT1 de couche de travail la plus radialement intérieure.

En deçà de 1.05 fois la largeur axiale LT1, la couche de protection la plus radialement intérieure n'est pas suffisamment débordante par rapport à la couche de travail la plus radialement intérieure pour pouvoir assurer un rôle de protection efficace vis-à-vis du martèlement. Au-delà de 1.25 fois la largeur axiale LT1, l'extrémité axiale de la couche de protection la plus radialement intérieure est très proche de l'extrémité axiale de la bande de roulement, ce qui augmente le risque de fissuration entre l'extrémité axiale de ladite couche de protection et l'extrémité axiale de la bande de roulement.

Préférentiellemrnt, les renforts métalliques élastiques des couches de protection respectivement radialement la plus intérieure, et radialement la plus extérieure vérifient les relations suivantes:
-) D1 ≥ D2
-) P1 ≥ P2
-) P1 ≥ 1.2*D1 et P2 ≥ 1.2*D2
-) 2.3 ≤ (D1*P1)/(D2*P2) ≤ 5

La couche de protection la plus radialement intérieure, débordante par rapport à la couche de travail la plus radialement intérieure, comprend des renforts ayant un diamètre D1 supérieur au diamètre D2 des renforts de la couche de protection la plus radialement extérieure, et répartis selon un pas axial P1 supérieur au pas axial P2 séparant les renforts de la couche de protection la plus radialement extérieure. En d'autres termes, l'armature de protection est constituée par une couche de protection la plus radialement intérieure avec des renforts de gros diamètre et une couche de protection la plus radialement extérieure avec des renforts de petit diamètre.

La couche de protection la plus radialement extérieure avec des renforts de petit diamètre permet d'éviter le blocage de la fissuration, générée par les coupures de la bande de roulement, radialement vers l'intérieur de l'armature de protection. En effet, des renforts avec un diamètre trop élevé, et donc trop rigides, favorisent un blocage de la fissuration radiale entrainant une propagation de fissure à la surface radialement extérieure de la couche de protection la plus radialement extérieure, générant la formation de poches de fissuration, puis une coalescence des poches de fissuration ainsi formées pouvant entraîner à terme une séparation entre la bande de roulement et l'armature de protection. Le choix d'un diamètre de renfort suffisamment petit permet d'éviter cet inconvénient et d'autoriser au moins partiellement une propagation radiale des fissures en direction de la couche de protection la plus radialement intérieure.

Par ailleurs une couche de protection la plus radialement intérieure avec des renforts de gros diamètre permet, d'une part, de bloquer la fissuration radiale en direction de l'armature de travail, particulièrement dommageable du point de vue de l'endurance de l'armature de sommet, et, d'autre part, de compenser la moindre rigidité de la couche de de protection la plus radialement extérieure comprenant de plus petits renforts et, par conséquent, de garantir une rigidité globale suffisante de l'armature de protection.

De plus, pour chaque couche de protection, le pas axial entre deux renforts consécutifs doit être supérieur à 1.2 fois le diamètre de renfort, d'une part, pour garantir une liaison satisfaisante, et donc un bon ancrage, avec les mélanges élastomériques radialement en contact avec ladite couche de protection, et d'autre part, pour éviter tout contact entre les renforts et, par conséquent, pour diminuer le risque de propagation de corrosion associé.

Enfin, le ratio (D1^{∗}P1)/ (D2^{∗}P2) entre les sections inter-renforts respectivement D1^{∗}P1 de la couche de protection la plus radialement intérieure, caractérisée par une épaisseur radiale D1 et une largeur axiale P1, et D2^{∗}P2 de la couche de protection la plus radialement extérieure, caractérisée par une épaisseur radiale D2 et une largeur axiale P2, doit être compris dans une plage de valeurs déterminée. En deçà de la borne inférieure de cette plage de valeurs égale à 2.3, soit le risque de fissuration en extrémité axiale de la couche de protection la plus radialement intérieure devient trop élevé (dans le cas où la section inter-renforts D1^{∗}P1 est trop petite), soit la propagation de la fissuration radiale à travers la couche de protection la plus radialement extérieure devient trop importante (dans le cas où la section inter-renforts D2^{∗}P2 est trop élevée). Au-delà de la borne supérieure de cette plage de valeurs égale à 5, soit la propagation de la fissuration radiale à travers la couche de protection la plus radialement intérieure en direction de l'armature de travail devient trop importante (dans le cas où la section inter-renforts D1^{∗}P1 est trop élevée), soit la propagation de la fissuration à la surface radialement extérieure de la couche de protection la plus radialement extérieure devient trop importante, avec un risque de déchapage augmenté (dans le cas où la section inter-renforts D2^{∗}P2 est trop petite).

Préférentiellement les renforts métalliques élastiques de la couche de protection la plus radialement intérieure ont un diamètre D1 au moins égal à 3 mm, de préférence au moins égal à 3.5 mm. Un diamètre D1 minimal, égal à 3 mm, pour les renforts de la couche de protection la plus radialement intérieure, permet un blocage efficace de la fissuration radiale en direction de l'armature de travail et un niveau de rigidité globale suffisant de l'armature de protection.

Egalement préférentiellement les renforts métalliques élastiques de la couche de protection la plus radialement extérieure ont un diamètre D2 au plus égal à 2.5 mm. Un diamètre D2 maximal, égal à 2.5 mm, pour les renforts de la couche de protection la plus radialement extérieure, permet d'éviter un blocage total de la fissuration radiale en direction de l'armature de travail, et donc une propagation de fissuration exclusivement surfacique pouvant entraîner un déchapage du pneumatique.

Selon un mode de réalisation préféré de l'armature de sommet, l'armature de sommet comprend une armature de frettage comprenant deux couches de frettage dont les renforts métalliques respectifs, enrobés dans un matériau élastomérique, parallèles entre eux et formant, avec la direction circonférentielle, un angle au plus égal à 10°, sont croisés d'une couche de frettage à la suivante. On distingue usuellement les couches de frettage à angle, avec des renforts formant des angles au moins égaux à 6° et au plus égaux à 8°, et les couches de frettage circonférentiel, avec des renforts sensiblement circonférentiels formant des angles voisins de 0° et au plus égaux à 5°. Les renforts métalliques de couche de frettage peuvent être soit élastiques, soit non extensibles. L'armature de frettage peut être positionnée radialement à l'intérieur de l'armature de travail, entre les deux couches de travail de l'armature de travail, ou radialement à l'extérieur de l'armature de travail.

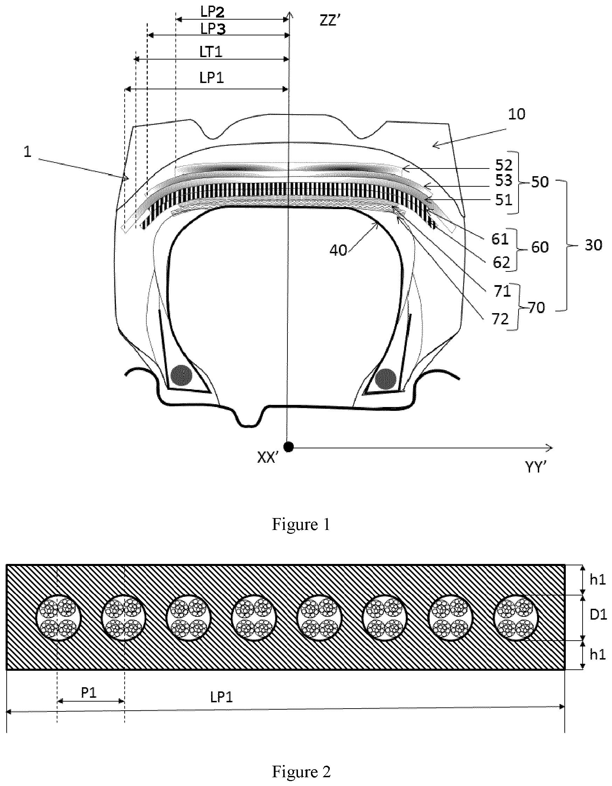

Les caractéristiques de l'invention sont illustrées par les figures 1 et 2 schématiques et non représentées à l'échelle, en référence à un pneumatique de dimension 53/80R63 :
- figure 1 : coupe méridienne d'un sommet de pneumatique pour véhicule lourd de type dumper selon l'invention ;
- figure 2 : coupe méridienne d'une portion d'armature de protection selon l'invention ;
- figure 3 : illustration de l'assemblage d'un câble tel qu'utilisé dans l'invention ;

Sur la figure 1, est représentée une coupe méridienne d'un pneumatique 1 pour véhicule lourd de type génie civil de dimension 53/80R63 comprenant une armature de sommet 30, radialement intérieure à une bande de roulement 10 et radialement extérieure à une armature de carcasse 40. L'armature de sommet 30 comprend, radialement de l'extérieur vers l'intérieur, une armature de protection 50, une armature de travail 60 et une armature de frettage 70. L'armature de protection 50 comprend trois couches de protection respectivement (51, 52, 53) contenant des renforts métalliques élastiques enrobés dans un matériau élastomérique, parallèles entre eux et formant des angles respectivement Alpha1, Alpha2, Alpha3 avec une direction circonférentielle (XX') tangente à la circonférence du pneumatique. Dans le cas illustré ici, les angles valent respectivement (33°, -33°, -45°). L'armature de travail 60 comprend deux couches de travail (61, 62) dont les renforts métalliques respectifs non extensibles, enrobés dans un matériau élastomérique, parallèles entre eux et formant, avec la direction circonférentielle (XX'), des angles respectivement égaux à 24°, pour la couche de travail la plus radialement intérieure 61, et -24°, pour la couche de travail la plus radialement extérieure 62. La couche de protection la plus radialement intérieure 51 est axialement débordante par rapport à la couche de travail la plus radialement intérieure 61, c'est-à-dire que 1a couche de protection la plus radialement intérieure 51 a une largeur axiale LP1 supérieure à la largeur axiale LT1 de la couche de travail la plus radialement intérieure 61. La couche de protection intermédiaire a une largeur LP3 inférieure ou égale à (LP1 -7 mm) dans le cas considéré ici, et la couche de protection la plus radialement extérieure 52 a une largeur axiale LP2 inférieure ou égale à la largeur axiale (LP3 - 7 mm). L'armature de frettage 7 comprend deux couches de frettage (71, 72) dont les renforts métalliques respectifs, enrobés dans un matériau élastomérique, parallèles entre eux et formant, avec la direction circonférentielle XX', un angle compris entre 6° et 10°, sont croisés d'une couche de frettage à la suivante.

La figure 2 représente une coupe méridienne de la couche de protection 51, respectivement (52, 53), avec des renforts d'un diamètre D1, respectivement (D2, D3), un pas P1, respectivement (P2, P3). La couche de protection la plus radialement intérieure 51 comprend de gros renforts métalliques élastiques ayant un gros diamètre D1, avantageusement au moins égal à 3 mm, et répartis axialement selon un pas axial P1 au moins égal à 1.2*D1, le pas axial étant la distance axiale entre les centres respectifs des sections circulaires de deux renforts consécutifs. La couche de protection la plus radialement extérieure 52 comprend de petits renforts métalliques élastiques ayant un petit diamètre D2, avantageusement au plus égal à 2.5 mm, et répartis axialement selon un pas axial P2 au moins égal à 1.2*D2. Les sections inter-renforts respectivement de la couche de protection la plus radialement intérieure 51 et de la couche de protection la plus radialement extérieure sont respectivement égales à D1*P1, D1 étant l'épaisseur radiale et P1 étant la largeur axiale de la section, et D2*P2, D2 étant l'épaisseur radiale et P2 étant la largeur axiale de la section. La couche de protection intermédiaire 53, intercalée entre les couches de protection la plus radialement intériure 51 et la plus radialement extérieure 52 a les mêmes renforts que la couche de protection la plus radialement extérieure 52. On a donc D3 qui est égal à D2 et P3 qui est égal à P2. Les angles des renforts des couches 52 et 53, avec la direction circonférentielle (XX') sont différents ainsi que leurs largeurs axiales, LP2 et LP3.

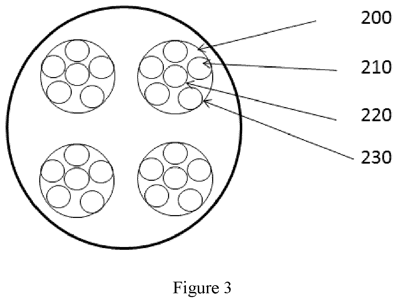

La figure 3 représente l'assemblage d'un câble tel qu'utilisé dans l'invention pour la réalisation des couches de protection. Le câble comprend 4 torons 200 enroulés en hélice, chaque toron est constitué d'une couche interne 220 d'un fil, entourés d'une couche externe 230 formée de 4 fils 210 enroulés autour de la couche interne.

Les inventeurs ont comparé un pneumatique selon l'invention I à un pneumatique de référence R dans la même dimension 53/80R63. Le pneumatique de référence est une solution classique de l'état de l'art avec une armature de protection comprenant deux couches de protections, alors que le pneumatique de l'invention a une armature de protection qui comprend trois couches de protection dont les angles sont distribués tel que revendiqués dans l'invention.

Le tableau 1 ci-après présente les caractéristiques techniques respectivement du pneumatique de référence R et du pneumatique selon l'invention I dans la dimension 53/80R63 étudiée:

**[Tableau 1]**

| Couches de sommet pour la dimension 53/80R63 | Caractéristiques | Pneumatique de référence R | Pneumatique selon l'invention I |
|---|---|---|---|
| Couche de protection la plus radialement intérieure 51 | Type de renfort R1 | 52.26=4*(4+9)*26 | 52.26=4*(4+9)*26 |
| | Module élastique en extension M1 d'un renfort | 67 GPa | 67 GPa |
| | Force à rupture Fm1 d'un renfort | 605 daN | 605 daN |
| | Diamètre D1 d'un renfort | 3.1 mm | 3.1 mm |
| | Pas axial P1 entre renforts | 3.7 mm | 3.7 mm |
| | Angle Alphal des renforts, par rapport à XX' | 33° | 33° |
| | Force à rupture Rm1 de la couche de protection | 1635 N/mm | 1635 N/mm |
| | Largeur axiale LP1 de la couche de protection | 1190 mm | 1190 mm |
| Couche de protection la plus radialement extérieure 52 | Type de renfort R2 | 24.26=4*(1+5)*26 | 24.26=4*(1+5)*26 |
| | Module élastique en extension M2 d'un renfort | 77 GPa | 77 GPa |
| | Force à rupture Fm2 d'un renfort | 255 daN | 255 daN |
| | Diamètre D2 d'un renfort | 1.9 mm | 1.9 mm |
| | Pas axial P2 entre renforts | 2.5 mm | 2.5 mm |
| | Angle des renforts Alpha2, par rapport à XX' | -33° | -33° |
| | Force à rupture Rm2 de la couche de protection | 1060 N/mm | 1060 N/mm |
| | Largeur axiale LP2 de la couche de protection | 956 mm | 956 mm |
| Armature de protection 50 | Ratio des sections inter-renforts D1^{∗}P1/D2^{∗}P2 | 3.1^{∗}3.7/1.9^{∗}2.5=2.41 | 3.1^{∗}3.7/1.9^{∗}2.5=2.41 |
| Toisième couche de protection 53, intercalée entre 51 et 52 | Alpha 3 | Sans objet | -45 ° |
| Armature de travail 60 | Largeur axiale LT1 de la couche de travail la plus radialement intérieure 61 | 1060 mm | 1060 mm |

Le pneumatique de l'invention diffère du pneumatique de référence par la présence de la troisième couche de protection, intercalée entre la première couche de protection la plus radialement intérieure et la deuxième couche de protection la plus radialement extérieure, et également par les relations entre les angles des renforts de chaque couche avec la direction cirocnférentielle. La troisième couche de protection utilise des renforts identiques à ceux de la couche de protection la plus radialement extérieure, mais la largeur de la troisième couche et l'orientation de ces renforts avec la direction cironférentielle peuvent être différentes de celles de la 2ème couche de protection.

Les caractéristiques du pneumatique selon l'invention vérifie bien les conditions essentielles de l'invention avec la combinaison des angles suivantes :
-) Alpha1 = 33°
-) Alpha2 = -33°
-) Alpha3 = -45°
Dès lors on obtient :
-) 15° ≤ |Alpha1| ≤ 40°
-) 15° ≤ |Alpha2| ≤ 40°
-) Alpha1 * Alpha2 ≤ 0
-) 35° ≤ |Alpha3| ≤ 75°
Et pour ce qui des écarts des angles des renforts des couches de protection avec une direction circonférentielle, on vérifie également la relation en valeurs absolues :
-) |(Alpha1-Alpha3) ≥ 10°
-) |(Alpha2-Alpha3) ≥ 10°.

Plus précisémment, pour le pneumatique selon l'invention, la couche de protection la plus radialement intérieure a une largeur axiale LP1 égale à 1190 mm, supérieure de 130 mm à la largeur axiale LT1 de la couche de travail la plus radialement intérieure. Les renforts métalliques élastiques de la couche de protection la plus radialement intérieure sont des câbles multitorons d'assemblage 4x(4+9)x0.26, c'est-à-dire constitués de 4 torons, chaque toron comprenant une couche interne de 4 fils internes et une couche externe de 9 fils externes enroulés en hélice autour de la couche interne, les fils ayant une section de diamètre d=0.26 mm.

De plus les renforts métalliques élastiques de la couche de protection la plus radialement intérieure ont un module élastique en extension égal à 67 GPa, une force à rupture égale à 605 daN, un diamètre D1 égal à 3.1 mm, et sont répartis axialement selon un pas axial P1 égal à 3.7 mm, et forment, avec la direction circonférentielle XX', un angle Alphal égal à 33°.

Les renforts métalliques élastiques de la couche de protection la plus radialement extérieure sont des câbles multitorons de structure 4x(1+5)x0.26, c'est-à-dire constitués de 4 torons, chaque toron comprenant une couche interne de 1 fil interne et une couche externe de 5 fils externes enroulés en hélice autour de la couche interne, les fils ayant une section de diamètre 0.26 mm.

Les renforts métalliques élastiques de la couche de protection la plus radialement extérieure ont un module élastique en extension égal à 77 GPa, une force à rupture égale à 255 daN, un diamètre D2 égal à 1.9 mm, et sont répartis axialement selon un pas axial P2 égal à 2.5 mm, et forment, avec la direction circonférentielle XX', un angle Alpha2 de -33°.

Encore pour le pneumatique de l'invention, la couche de protection intermédiaire 53 a les mêmes renforts que la couche de protection la plus radialement extérieure, c'est-à-dire des câbles multitorons de structure 4x(1+5)x0.26, constitués de 4 torons, chaque toron comprenant une couche interne de 1 fil interne et une couche externe de 5 fils externes enroulés en hélice autour de la couche interne, les fils ayant une section de diamètre 0.26 mm. En revanche ces renforts font avec la direction circonférentielle XX', un angle Alpha3 de -45°.

Les inventeurs ont montré, par des calculs par éléments finis, que la résistance du pneumatique au déchapage suite à des coupures de la bande de roulement s'est améliorée. L'ajout de la troisième couche de protection avec des renforts élastiques contribue à définir une armature de protection déformable pour absorber les obstacles des pistes de roulage, sans sectionner les renforts. Par ailleurs le choix approprié des renforts permet d'aboutir à un compromis équilibré entre les rigidités d'indentation et les rigidités radiales pour porter plus de charges avec une endurance accrue, sans déchapage.

Les inventeurs ont simulé le test d'enfoncement du polar dans le sommet du pneumatique tel que décrit au paragraphe [0024]. La hauteur d'enfoncement à la rupture de la première couche de protection est comparée entre les pneumatiques de référence et de l'invention. L'amélioration de la hauteur d'enfoncement est de 12 % meilleure avec le pneumatique de l'invention.

Les cisaillements de clivage dans les plans méridiens et cirfonférentiels sont sensiblement au même niveau pour les pneumatiques de référence et de l'invention. La couche de protection additionnelle n'a donc pas occasionné une dégradation des cisaillements aux extrémités axiales des couches de sommet et de protection.

## Revendications

1. Pneumatique (1) pour véhicule lourd de type génie civil comprenant :
- une armature de sommet (30), radialement intérieure à une bande de roulement (10) et radialement extérieure à une armature de carcasse (40) ;
- l'armature de sommet (30) comprenant, radialement de l'extérieur vers l'intérieur, une armature de protection (50) et une armature de travail (60)
- ladite armature de protection (50) comprenant au moins deux couches de protection (51, 52) :
- une première couche de protection (51), de largeur axiale LP1, la plus radialement intérieure, comprenant des renforts métalliques élastiques ayant un module élastique en extension au plus égal à 150 GPa, enrobés dans un matériau élastomérique, parallèles entre eux et formant, avec une direction circonférentielle (XX') tangente à la circonférence du pneumatique, un angle Alphal, lesdits renforts ayant un diamètre D1, répartis selon un pas axial P1;
- une deuxième couche de protection (52), de largeur axiale LP2, la plus radialement extérieure, comprenant des renforts métalliques élastiques ayant un module élastique en extension au plus égal à 150 GPa, enrobés dans un matériau élastomérique, parallèles entre eux et formant, avec une direction circonférentielle (XX') tangente à la circonférence du pneumatique, un angle Alpha2, lesdits renforts ayant un diamètre D2, répartis selon un pas axial P2;
- l'armature de travail (60) comprenant deux couches de travail (61, 62) comprenant respectivement des renforts métalliques enrobés dans un matériau élastomérique, parallèles entre eux, formant, avec la direction circonférentielle (XX'), un angle au moins égal à 15° et au plus égal à 45°, et croisés d'une couche de travail à la suivante ; **caractérisé en ce qu'**une troisième couche de protection (53), ci-après désignée couche de protection intermédiaire, de largeur axiale LP3, est intercalée entre les couches de protection radialement la plus intérieure (51) et radialement la plus extérieure (52), et est en contact avec elles, ladite couche de protection intermédiaire comprend des renforts métalliques élastiques ayant un module élastique en extension au plus égal à 150 GPa, enrobés dans un matériau élastomérique, parallèles entre eux et formant, avec une direction circonférentielle (XX') tangente à la circonférence du pneumatique, un angle Alpha3, lesdits renforts ayant un diamètre D3, répartis selon un pas axial P3 ; **en ce que** les angles Alphal, Alpha2, Alpha3 des trois couches de protection respectivement (51), (52), (53), la plus radialement intérieure, la plus radialement extérieure, et la couche de protection intermédiaire vérifient les relations suivantes :
-) 15° ≤ |Alpha1| ≤ 40°
-) 15° ≤ |Alpha2| ≤ 40°
-) Alpha1 * Alpha2 ≤ 0
-) 35° ≤ |Alpha3| ≤ 75°
**et en ce que** les écarts d'angles des renforts métalliques élastiques des couches de protection avec la direction circonférentielle XX' en valeurs absolues vérifient les relations suivantes :
-) |(Alpha1-Alpha3) ≥ 10°
-) |(Alpha2-Alpha3) ≥ 10°

2. Pneumatique (1) pour véhicule lourd de type génie civil selon la revendication 1, dans lequel la tension répartie de rupture en extention de chaque couche de protection (51, 52, 53) est supérieure ou égale à 100 daN/mm.

3. Pneumatique (1) pour véhicule lourd de type génie civil selon l'une des revendications de 1 à 2, dans lequel les renforts de la couches de protection (53), intercalée entre les deux autres couches de protection (51), et (52) sont identiques à ceux de la couche de protection la plus radialement extérieure (52).

4. Pneumatique (1) pour véhicule lourd de type génie civil selon l'une des revendications de 1 à 3, **dans lequel** l'angle Alpha3 des renforts de la couche de protection intermédaire (53) avec la direction circonférentielle (XX') est égale à - 45°.

5. Pneumatique (1) pour véhicule lourd de type génie civil selon la revendication 4, **dans lequel** les valeurs des angles Alphal et Alpha2 sont respectivement 33° et - 33°.

6. Pneumatique (1) pour véhicule lourd de type génie civil selon l'une des revendications 1 à 5, **dans lequel** la largeur axiale LP3 de la couche de protection intermédaire (53) est telle que LP3 ≤ Min (LP1, LP2).

7. Pneumatique (1) pour véhicule lourd de type génie civil selon l'une quelconque des revendications 1 à 6, **dans lequel** les distances axiales respectives LP1, LP2, LP3 des couches de protection respectives (51), (52), (53) vérifient la relation LP2 ≤ LP3 ≤LP1.

8. Pneumatique (1) pour véhicule lourd de type génie civil selon l'une quelconque des revendications 1 à 7, **dans lequel** la couche de protection la plus radialement intérieure (51) a une largeur axiale LP1 au moins égale à 1.05 fois et au plus égale à 1.25 fois la largeur axiale LT1 de couche de travail la plus radialement intérieure (61).

9. Pneumatique (1) pour véhicule lourd de type génie civil selon l'une quelconque des revendications 1 à 8, **dans lequel** les renforts métalliques élastiques des couches de protection respectivement radialement la plus intérieure (51), et la plus extérieure (52) vérifient les relations suivantes:
-) D1 ≥ D2
-) P1 ≥ P2
-) P1 ≥ 1.2*D1 et P2 ≥ 1.2*D2
-) 2.4 ≤ (D1*P1)/(D2*P2) ≤ 5

10. Pneumatique (1) pour véhicule lourd de type génie civil selon l'une des revendication de 1 à 9, **dans lequel** les renforts métalliques élastiques de la couche de protection la plus radialement intérieure (51) ont un diamètre D1 au moins égal à 3 mm, de préférence au moins égal à 3.5 mm.

11. Pneumatique (1) pour véhicule lourd de type génie civil selon l'une des revendications de 1 à 10, **dans lequel** les renforts métalliques élastiques de la couche de protection la plus radialement extérieure (52) ont un diamètre D2 au plus égal à 2.5 mm.

12. Pneumatique (1) pour véhicule lourd de type génie civil selon l'une quelconque des revendications 1 à 11, **dans lequel** l'armature de sommet (3) comprend une armature de frettage (7) comprenant deux couches de frettage (71) dont les renforts métalliques, enrobés dans un matériau élastomérique, et parallèles entre eux, forment avec la direction circonférentielle (XX'), un angle au plus égal à 10°.

## Patentansprüche

1. Reifen (1) für ein Baustellenschwerlastfahrzeug, umfassend:
- eine Scheitelverstärkung (30), radial innerhalb eines Laufstreifens (10) und radial außerhalb einer Karkassenverstärkung (40);
- wobei die Scheitelverstärkung (30), radial von außen nach innen, eine Schutzverstärkung (50) und eine Arbeitsverstärkung (60) umfasst
- wobei die Schutzverstärkung (50) mindestens zwei Schutzschichten (51, 52) umfasst:
- eine erste Schutzschicht (51) mit der axialen Breite LP1, die radial innerste, umfassend elastische metallische Festigkeitsträger mit einem Elastizitätsmodul bei Dehnung von höchstens 150 GPa, die in ein Elastomermaterial eingebettet sind, parallel zueinander sind und mit einer Umfangsrichtung (XX'), die den Umfang des Reifens tangiert, einen Winkel Alphal bilden, wobei die Festigkeitsträger einen Durchmesser D1 haben, gemäß einer axialen Schrittweite P1 verteilt sind;
- eine zweite Schutzschicht (52) mit der axialen Breite LP2, die radial äußerste, umfassend elastische metallische Festigkeitsträger mit einem Elastizitätsmodul bei Dehnung von höchstens 150 GPa, die in ein Elastomermaterial eingebettet sind, parallel zueinander sind und mit einer Umfangsrichtung (XX'), die den Umfang des Reifens tangiert, einen Winkel Alpha2 bilden, wobei die Festigkeitsträger einen Durchmesser D2 haben, gemäß einer axialen Schrittweite P2 verteilt sind;
- wobei die Arbeitsverstärkung (60) zwei Arbeitsschichten (61, 62) umfasst, die jeweils metallische Festigkeitsträger umfassen, die in ein Elastomermaterial eingebettet sind, parallel zueinander sind, mit der Umfangsrichtung (XX') einen Winkel von mindestens 15° und höchstens 45° bilden und von einer Arbeitsschicht zur folgenden überkreuz angeordnet sind;
**dadurch gekennzeichnet, dass** eine dritte Schutzschicht (53), im Folgenden Zwischenschutzschicht genannt, mit der axialen Breite LP3, zwischen der radial innersten (51) und der radial äußersten (52) Schutzschicht angeordnet ist und in Kontakt mit ihnen ist, die Zwischenschutzschicht elastische metallische Festigkeitsträger mit einem Elastizitätsmodul bei Dehnung von höchstens 150 GPa umfasst, die in ein Elastomermaterial eingebettet sind, parallel zueinander sind und mit einer Umfangsrichtung (XX'), die den Umfang des Reifens tangiert, einen Winkel Alpha3 bilden, wobei die Festigkeitsträger einen Durchmesser D3 haben, gemäß einer axialen Schrittweite P3 verteilt sind;
dadurch, dass die Winkel Alphal, Alpha2, Alpha3 der drei Schutzschichten (51), (52), (53), der radial innersten, der radial äußersten bzw. der Zwischenschutzschicht, die folgenden Gleichungen erfüllen:
-) 15° ≤ |Alpha1| ≤ 40°
-) 15° ≤ |Alpha2| ≤ 40°
-) Alpha1 * Alpha2 ≤ 0
-) 35° ≤ |Alpha3| ≤ 75°
und dadurch, dass die Winkelabweichungen der elastischen metallischen Festigkeitsträger der Schutzschichten mit der Umfangsrichtung XX' als absolute Werte die folgenden Gleichungen erfüllen:
-) |(Alpha1-Alpha3) ≥ 10°
-) |(Alpha2-Alpha3) ≥ 10°

2. Reifen (1) für ein Baustellenschwerlastfahrzeug nach Anspruch 1, bei dem die verteilte Bruchspannung bei Dehnung jeder Schutzschicht (51, 52, 53) größer als oder gleich 100 daN/mm ist.

3. Reifen (1) für ein Baustellenschwerlastfahrzeug nach einem der Ansprüche 1 bis 2, bei dem die Festigkeitsträger der Schutzschicht (53), die zwischen den beiden anderen Schutzschichten (51) und (52) angeordnet ist, identisch mit denen der radial äußersten Schutzschicht (52) sind.

4. Reifen (1) für ein Baustellenschwerlastfahrzeug nach einem der Ansprüche 1 bis 3, bei dem der Winkel Alpha3 der Festigkeitsträger der Zwischenschutzschicht (53) mit der Umfangsrichtung (XX') -45° beträgt.

5. Reifen (1) für ein Baustellenschwerlastfahrzeug nach Anspruch 4, bei dem die Werte der Winkel Alphal und Alpha2 33° beziehungsweise -33° betragen.

6. Reifen (1) für ein Baustellenschwerlastfahrzeug nach einem der Ansprüche 1 bis 5, bei dem die axiale Breite LP3 der Zwischenschutzschicht (53) derart ist, dass LP3 ≤ Min (LP1, LP2).

7. Reifen (1) für ein Baustellenschwerlastfahrzeug nach einem der Ansprüche 1 bis 6, bei dem die jeweiligen axialen Abstände LP1, LP2, LP3 der jeweiligen Schutzschichten (51), (52), (53) die Gleichung LP2 ≤ LP3 ≤ LP1 erfüllen.

8. Reifen (1) für ein Baustellenschwerlastfahrzeug nach einem der Ansprüche 1 bis 7, bei dem die radial innerste Schutzschicht (51) eine axiale Breite LP1 hat, die mindestens gleich dem 1,05-Fachen und höchstens gleich dem 1,25-Fachen der axialen Breite LT1 der radial innersten Arbeitsschicht (61) ist.

9. Reifen (1) für ein Baustellenschwerlastfahrzeug nach einem der Ansprüche 1 bis 8, bei dem die elastischen metallischen Festigkeitsträger der radial innersten (51) beziehungsweise der radial äußersten (52) Schutzschichten die folgenden Gleichungen erfüllen:
-) D1 ≥ D2
-) P1 ≥ P2
-) P1 ≥ 1,2*D1 et P2 ≥ 1,2*D2
-) 2,4 ≤ (D1*P1)/(D2*P2) ≤ 5

10. Reifen (1) für ein Baustellenschwerlastfahrzeug nach einem der Ansprüche 1 bis 9, bei dem die elastischen metallischen Festigkeitsträger der radial innersten Schutzschicht (51) einen Durchmesser D1 von mindestens 3 mm, bevorzugt mindestens 3,5 mm haben.

11. Reifen (1) für ein Baustellenschwerlastfahrzeug nach einem der Ansprüche 1 bis 10, bei dem die elastischen metallischen Festigkeitsträger der radial äußersten Schutzschicht (52) einen Durchmesser D2 von höchstens 2,5 mm haben.

12. Reifen (1) für ein Baustellenschwerlastfahrzeug nach einem der Ansprüche 1 bis 11, bei dem die Scheitelverstärkung (3) eine Umreifungsverstärkung (7) umfasst, die zwei Umreifungsschichten (71) umfasst, deren metallische Festigkeitsträger, die in ein Elastomermaterial eingebettet sind und parallel zueinander sind, mit der Umfangsrichtung (XX') einen Winkel von höchstens 10° bilden.

## Claims

1. Tyre (1) for a heavy-duty vehicle of construction plant type, comprising:
- a crown reinforcement (30), radially on the inside of a tread (10) and radially on the outside of a carcass reinforcement (40);
- the crown reinforcement (30) comprising, radially from the outside to the inside, a protective reinforcement (50) and a working reinforcement (60),
- said protective reinforcement (50) comprising at least two protective layers (51, 52):
- a first, radially innermost protective layer (51), of axial width LP1, comprising elastic metal reinforcers having a tensile elastic modulus at most equal to 150 GPa, which are coated in an elastomeric material, are mutually parallel and form an angle Alpha1 with a circumferential direction (XX') tangential to the circumference of the tyre, said reinforcers having a diameter D1 and being distributed at an axial spacing P1;
- a second, radially outermost protective layer (52), of axial width LP2, comprising elastic metal reinforcers having a tensile elastic modulus at most equal to 150 GPa, which are coated in an elastomeric material, are mutually parallel and form an angle Alpha2 with a circumferential direction (XX') tangential to the circumference of the tyre, said reinforcers having a diameter D2 and being distributed at an axial spacing P2;
- the working reinforcement (60) comprising two working layers (61, 62) respectively comprising metal reinforcers that are coated in an elastomeric material, are mutually parallel, form an angle at least equal to 15° and at most equal to 45° with the circumferential direction (XX'), and are crossed from one working layer to the next; **characterized in that** a third protective layer (53), referred to below as intermediate protective layer, of axial width LP3, is interposed between the radially innermost protective layer (51) and radially outermost protective layer (52) and is in contact therewith, said intermediate protective layer comprising elastic metal reinforcers having a tensile elastic modulus at most equal to 150 GPa, which are coated in an elastomeric material, are mutually parallel and form an angle Alpha3 with a circumferential direction (XX') tangential to the circumference of the tyre, said reinforcers having a diameter D3 and being distributed at an axial spacing P3; **in that** the angles Alpha1, Alpha2, Alpha3 of the radially innermost protective layer (51), the radially outermost protective layer (52) and the intermediate protective layer (53), respectively, satisfy the following relationships:
-) 15° ≤ |Alpha1| ≤ 40°
-) 15° ≤ |Alpha2| ≤ 40°
-) Alpha1 * Alpha2 ≤ 0
-) 35° ≤ |Alpha3| ≤ 75°
**and in that** the differences between angles of the elastic metal reinforcers of the protective layers with the circumferential direction XX' in terms of absolute values satisfy the following relationships:
-) |(Alpha1-Alpha3) ≥ 10°
-) |(Alpha2-Alpha3) ≥ 10°

2. Tyre (1) for a heavy-duty vehicle of construction plant type according to Claim 1, wherein the distributed breaking tension in extension of each protective layer (51, 52, 53) is greater than or equal to 100 daN/mm.

3. Tyre (1) for a heavy-duty vehicle of construction plant type according to either of Claims 1 and 2, wherein the reinforcers of the protective layer (53) interposed between the two other protective layers (51) and (52) are identical to those of the radially outermost protective layer (52).

4. Tyre (1) for a heavy-duty vehicle of construction plant type according to one of Claims 1 to 3, **wherein** the angle Alpha3 of the reinforcers of the intermediate protective layer (53) with the circumferential direction (XX') is equal to -45°.

5. Tyre (1) for a heavy-duty vehicle of construction plant type according to Claim 4, **wherein** the values of the angles Alphal and Alpha2 are 33° and -33°, respectively.

6. Tyre (1) for a heavy-duty vehicle of construction plant type according to one of Claims 1 to 5, **wherein** the axial width LP3 of the intermediate protective layer (53) is such that LP3 ≤ Min (LP1, LP2).

7. Tyre (1) for a heavy-duty vehicle of construction plant type according to any one of Claims 1 to 6, **wherein** the respective axial distances LP1, LP2, LP3 of the respective protective layers (51), (52), (53) satisfy the relationship LP2 ≤ LP3 ≤ LP1.

8. Tyre (1) for a heavy-duty vehicle of construction plant type according to any one of Claims 1 to 7, **wherein** the radially innermost protective layer (51) has an axial width LP1 at least equal to 1.05 times and at most equal to 1.25 times the axial width LT1 of the radially innermost working layer (61).

9. Tyre (1) for a heavy-duty vehicle of construction plant type according to any one of Claims 1 to 8, **wherein** the elastic metal reinforcers of the radially innermost protective layer (51) and radially outermost protective layer (52), respectively, satisfy the following relationships:
-) D1 ≥ D2
-) P1 ≥ P2
-) P1 ≥ 1.2*D1 et P2 ≥ 1.2*D2
-) 2.4 ≤ (D1*P1)/(D2*P2) ≤ 5

10. Tyre (1) for a heavy-duty vehicle of construction plant type according to one of Claims 1 to 9, **wherein** the elastic metal reinforcers of the radially innermost protective layer (51) have a diameter D1 at least equal to 3 mm, preferably at least equal to 3.5 mm.

11. Tyre (1) for a heavy-duty vehicle of construction plant type according to one of Claims 1 to 10, **wherein** the elastic metal reinforcers of the radially outermost protective layer (52) have a diameter D2 at most equal to 2.5 mm.

12. Tyre (1) for a heavy-duty vehicle of construction plant type according to any one of Claims 1 to 11, **wherein** the crown reinforcement (3) comprises a hoop reinforcement (7) comprising two hooping layers (71), the metal reinforcers of which, which are coated in an elastomeric material and are mutually parallel, form an angle at most equal to 10° with the circumferential direction (XX').
